# FASCICULE DE BREVET EUROPEEN

(11) **EP 1 044 941 B1**
(45) Date de publication et mention de la délivrance du brevet: **09.07.2003**
(21) Numéro de dépôt: 00401058.3
(22) Date de dépôt: 14.04.2000
(51) Int. Cl.: C04B 28/08, C04B 40/06

(54) **Béton à prise différée**
Beton mit zeitversetzer Abbindung
Deferred setting concrete

(30) Priorité: 16.04.1999 FR 9904808
(43) Date de publication de la demande: 18.10.2000
(73) Titulaire: COMPAGNIE DU SOL, 92000 Nanterre (FR)
(72) Inventeur: Vattement, Hubert, 77130 Montereau (FR)
(74) Mandataire: Nevant, Marc

(56) Documents cités:
- EP-A- 0 522 347
- EP-A- 0 546 699
- DE-A- 3 411 009
- US-A- 5 447 197

## Description

La présente invention concerne le domaine de la construction et du bâtiment. Plus précisément, l'invention concerne un béton dont la prise est initiée après sa mise en oeuvre, ainsi qu'une méthode pour déclencher la prise dudit béton.

Le béton utilisé actuellement dans les travaux spéciaux possède une rhéologie qui n'est pas adaptée aux critères d'exécution des fondations profondes.

Le problème majeur est l'évolution de la rhéologie. En effet, le temps de rigidification est très souvent inférieur au temps de bétonnage ce qui conduit à produire des ouvrages où on observe
- un mauvais enrobage des armatures,
- des inclusions de boue de forage,
- une mauvaise adhérence entre le béton et les armatures.

Les tentatives de modification de ces bétons avec des adjuvants ne permettent pas ou permettent difficilement d'atteindre la rhéologie souhaitée, ce qui limite le volume des bétonnages et par conséquent les rendements.

L'invention se propose de remédier à ces inconvénients au moyen d'un béton dont le déclenchement de la prise est effectué après sa mise en place. Ledit béton sera appelé dans ce qui suit "béton à prise différée".

Ainsi, selon un premier aspect, l'invention concerne un béton à prise différée selon la revendication 1.

Ledit béton est constitué par un mélange comprenant essentiellement un laitier de haut fourneau, des granulats tels que du sable et/ou des graviers ou gravillons, et de l'eau.

Généralement, le laitier de haut fourneau représente de environ 10 % à environ 35 % en poids de la composition de béton. Bien que la nature du laitier de haut fourneau ne soit pas particulièrement critique, il est préférable que celui-ci soit du type basique et que le rapport pondéral CaO/SiO₂ soit compris entre environ 1,10 et environ 1,35. A titre d'exemple de laitier utilisable dans le cadre de la présente invention, on peut citer un matériau comprenant comme composants principaux (en pourcentage en poids), 33 à 40 % de SiO₂, 8 à 16 % de Al₂O₃, 39 à 44 % de CaO, 4 à 9 % de MgO, et 0,5 à 1,5 % d'une source d'ions S²⁻.

Les granulats, habituels, utilisés pour fabriquer le béton, à savoir le sable et/ou les graviers ou gravillons, représentent généralement de environ 60 % à environ 80 % en poids de la composition de béton, le reste du mélange étant constitué par l'eau.

Le béton selon l'invention peut également comprendre tout matériau inerte utilisé couramment dans ce domaine, comme par exemple des cendres volantes et/ou des charges calcaires ou siliceuses. Dans ce cas, la quantité de matériaux inertes utilisée est comprise entre environ 5 % et environ 30 % en poids, par rapport au poids du laitier de haut fourneau.

Conformément à l'invention, le laitier de haut fourneau a avantageusement une granulométrie inférieure à environ 200 µm, de préférence inférieure à environ 100 µm. Il est souhaitable que cette granulométrie ne soit pas inférieure à environ 30 µm.

Le béton selon l'invention ne prend pas tel quel. Il permet donc de bétonner des volumes indéfinis sans risque de rigidification prématurée induisant des malfaçons.

Conformément à l'invention la prise du béton est déclenchée après la mise en place de celui-ci dans les tranchées.

Ainsi, selon un autre aspect, l'invention concerne une méthode pour déclencher la prise du béton décrit ci-dessus, qui consiste à activer le laitier de haut fourneau.

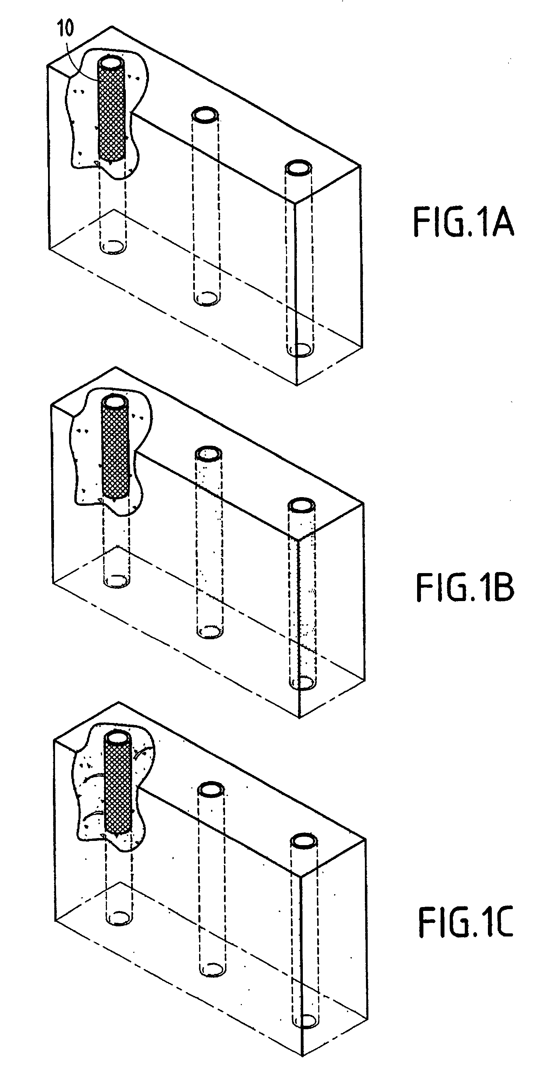

Selon un mode de réalisation de l'invention, représenté aux figures 1A à 1C, l'activation du laitier est effectuée à l'aide d'un agent activant alcalin, en utilisant le principe de la diffusion ionique.

La figure 1A représente une cage d'armature équipée de tubes crépinés 10 déposés environ tous les mètres. Ces tubes sont enrobés d'un non-tissé qui empêche la laitance de les colmater. Après bétonnage, ces tubes sont remplis d'une solution d'un agent activant alcalin tel que la soude, la potasse, ou le carbonate de sodium ou de potassium (figure 1B). Après quelques jours, les ions alcalins migrent des tubes crépinés et diffusent dans le béton, ce qui active le laitier de haut fourneau et déclenche la prise du béton (figure 1C).

Selon ce mode de réalisation, il est souhaitable d'utiliser une quantité d'agent alcalin telle que le pH final du béton soit amené à une valeur comprise entre environ 12 et environ 13,5, de préférence à une valeur d'environ 12,7.

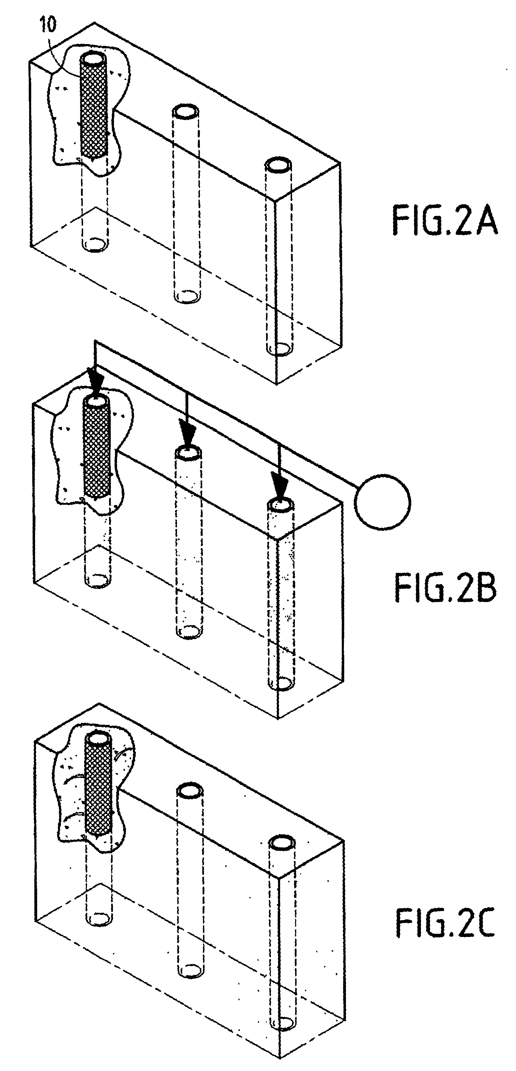

Les figures 2A à 2C représentent un autre mode de réalisation de l'invention, qui permet d'initier la prise du béton plus rapidement.

Comme dans le mode de réalisation précédent, on utilise une cage d'armature équipée de tubes crépinés ou de tubes à manchette 10 (figure 2A). Après bétonnage, on injecte sous pression un agent activant (figure 2B) qui diffuse par percolation au sein de la masse du béton, active le laitier de haut fourneau et déclenche ainsi la prise du béton (figure 2C).

Comme agent activant, on peut utiliser un composé à base de chaux, comme la chaux elle-même ou la chaux hydratée (également connue sous le nom de chaux éteinte). Il est également possible d'utiliser un composé à base de sulfate tel que le gypse. Un composé mixte (composé à base de chaux/composé à base de sulfate) convient également; dans ce cas, le rapport pondéral composé à base de chaux/composé à base de sulfate est généralement compris entre environ 0,5 et environ 1,5.

Il est souhaitable d'utiliser dans ce cas une quantité d'agent activant comprise entre environ 2 % et environ 15 % en poids par rapport au poids du laitier de haut fourneau.

Selon une variante des modes de réalisation décrits ci-dessus, il est possible d'enrober l'agent activant dans une enveloppe, notamment une enveloppe soluble, qui se détruit au cours du temps pour diffuser ainsi progressivement ledit agent activant.

A titre d'exemple d'enveloppe utilisable dans la méthode de l'invention, on peut citer les films d'alcool polyvinylique.

L'invention est illustrée par l'exemple suivant donné à titre uniquement indicatif.

### Exemple

On prépare le béton de composition suivante:

| | |
|---|---|
| Laitier de haut fourneau | 400 kg |
| Sable 0/5 | 850 kg |
| Gravillon 5/25 | 900 kg |
| Eau | environ 200 l |

Ce béton ne prend pas ; le déclenchement de la prise peut être effectué selon l'une des méthodes décrites ci-dessus. Ce béton ne nécessite donc pas l'utilisation d'adjuvants.

## Revendications

1. Béton à prise différée, constitué d'un mélange comprenant essentiellement un laitier de haut fourneau, des granulats et de l'eau.

2. Béton selon la revendication 1, dans lequel le laitier de haut fourneau représente d'environ 10 % à environ 35 % en poids de la composition de béton.

3. Béton selon la revendication 1 ou 2, dans lequel le laitier de haut fourneau a une granulométrie inférieure à environ 200 µm, de préférence inférieure à environ 100 µm.

4. Méthode pour déclencher la prise du béton tel que défini dans l'une des revendications 1 à 3, qui consiste à activer le laitier de haut fourneau.

5. Méthode selon la revendication 4, dans laquelle l'activation est effectuée au moyen d'un agent alcalin tel que la soude, la potasse, ou le carbonate de sodium ou de potassium.

6. Méthode selon la revendication 5, dans laquelle la quantité d'agent alcalin utilisée est telle que le pH final du béton est compris entre environ 12 et environ 13,5.

7. Méthode selon la revendication 4, dans laquelle l'activation est effectuée au moyen d'un composé à base de chaux, d'un composé à base de sulfate, ou d'un mélange d'un composé à base de chaux et d'un composé à base de sulfate.

8. Méthode selon la revendication 7, dans laquelle l'activation est effectuée au moyen d'un mélange d'un composé à base de chaux et d'un composé à base de sulfate, dans un rapport pondéral compris entre environ 0,5 et environ 1,5.

9. Méthode selon la revendication 7 ou 8, dans laquelle la quantité d'agent activant utilisée est comprise entre environ 2 % et environ 15 % en poids par rapport au poids du laitier de haut fourneau.

10. Méthode selon l'une des revendications 4 à 9, dans laquelle l'agent activant est enrobé dans une enveloppe qui se détruit au cours du temps.

## Patentansprüche

1. Beton mit zeitversetzter Abbindung, bestehend aus einem Gemisch, das im Wesentlichen eine Hochofenschlacke, Zuschlagsstoffe und Wasser umfasst.

2. Beton gemäß Anspruch 1, wobei die Hochofenschlacke etwa 10 Gew.-% bis etwa 35 Gew.-% der Betonzusammensetzung ausmacht.

3. Beton gemäß einem der Ansprüche 1 oder 2, wobei die Hochofenschlacke eine Korngröße von unter etwa 200 µm, vorzugsweise von unter etwa 100 µm aufweist.

4. Verfahren zum Auslösen des Abbindevorganges des Betons, der wie in einem der Ansprüche 1 bis 3 definiert ist, durch das Aktivieren der Hochofenschlacke.

5. Verfahren gemäß Anspruch 4, wobei die Aktivierung mittels eines alkalischen Mittels wie Natriumhydroxid, Kaliumhydroxid oder Natrium- oder Kaliumcarbonat durchgeführt wird.

6. Verfahren gemäß Anspruch 5, wobei die verwendete Menge des alkalischen Mittels so eingestellt ist, dass der pH-Wert des Betons schließlich zwischen etwa 12 und etwa 13,5 liegt.

7. Verfahren gemäß Anspruch 4, wobei die Aktivierung mittels einer Verbindung auf Kalkbasis, einer Verbindung auf Sulfatbasis oder eines Gemischs einer Verbindung auf Kalkbasis und einer Verbindung auf Sulfatbasis erfolgt.

8. Verfahren gemäß Anspruch 7, wobei die Aktivierung mittels eines Gemischs einer Verbindung auf Kalkbasis und einer Verbindung auf Sulfatbasis, die in einem Gewichtsverhältnis von zwischen etwa 0,5 und etwa 1,5 vorliegen, erfolgt.

9. Verfahren gemäß einem der Ansprüche 7 oder 8, wobei die verwendete Menge des Aktivierungsmittels zwischen etwa 2 Gew.-% und etwa 15 Gew.-%, bezogen auf das Gewicht der Hochofenschlacke, liegt.

10. Verfahren gemäß einem der Ansprüche 4 bis 9, wobei das Aktivierungsmittel von einer Hülle ummantelt ist, die sich im Laufe der Zeit auflöst.

## Claims

1. A delayed-setting concrete which consists of a mixture essentially comprising a blast furnace slag, aggregates and water.

2. The concrete according to claim 1 in which the blast furnace slag represents from about 10% to about 35% by weight of the concrete composition.

3. The concrete according to claim 1 or 2 in which the blast furnace slag has a grain size below about 200 µm, preferably below about 100 µm.

4. A method of initiating the setting of the concrete as defined in one of claims 1 to 3, which consists in activating the blast furnace slag.

5. The method according to claim 4 in which the activation is carried out by means of an alkaline agent such as sodium hydroxide, potassium hydroxide or sodium or potassium carbonate.

6. The method according to claim 5 in which the amount of alkaline agent used is such that the final pH of the concrete is between about 12 and about 13.5.

7. The method according to claim 4 in which the activation is carried out by means of a lime-based compound, a sulfate-based compound or a mixture of a lime-based compound and a sulfate-based compound.

8. The method according to claim 7 in which the activation is carried out by means of a mixture of a lime-based compound and a sulfate-based compound in a weight ratio of between about 0.5 and about 1.5.

9. The method according to claim 7 or 8 in which the amount of activating agent used is between about 2% and about 15% by weight, based on the weight of the blast furnace slag.

10. The method according to one of claims 4 to 9 in which the activating agent is embedded in an envelope which degrades over time.
